# EUROPEAN PATENT SPECIFICATION

(11) **EP 3 425 294 B1**
(45) Date of publication and mention of the grant of the patent: **14.10.2020**
(21) Application number: 18180040.0
(22) Date of filing: 27.06.2018
(51) Int. Cl.: F24F 7/013, F24F 7/06, F24F 13/02, F04D 29/60, F24F 5/00, F24F 7/00, F24F 12/00, F04D 29/40

(54) **FAN UNIT**
LÜFTEREINHEIT
UNITÉ DE VENTILATEUR

(30) Priority: 03.07.2017 JP 2017130183; 06.12.2017 JP 2017233963
(43) Date of publication of application: 09.01.2019
(73) Proprietor: Deutinger, Christian, Tokyo 140-0001 (JP)
(72) Inventor: Deutinger, Christian, Tokyo, 140-0001 (JP)
(74) Representative: Betten & Resch

(56) References cited:
- EP-A1- 2 894 412
- EP-A1- 3 045 831
- EP-A1- 3 168 544
- US-A- 5 050 667
- US-A1- 2015 211 805

## Description

### TECHNICAL FIELD

The present invention relates to a fan unit, and in particular, to a fan unit used for ventilating the indoor air of a building.

### BACKGROUND ART

A ventilation device and a ventilation system, provided to a wall of a building such as a house and used for ventilating the indoor air of the building, have been known.

For example, JP 9-318109 A (Patent Literature 1) describes a ventilation device including an airduct in which one end thereof is open as a suction port and the other end thereof is provided with a motor. The ventilation device also includes an air outlet port formed on the outer periphery of the motor mounting portion of the airduct, and a pressure sensor that detects a pressure difference between the upstream side and the downstream side of an orifice provided near the air outlet port. In the ventilating device, a predetermined air volume is output according to a pressure difference detected by the pressure sensor. According to Patent Literature 1, the pressure sensor is accommodated in the cover body, and the orifice, interposed in the radial direction of the airduct, is configured to be integral with a part of the cover body.

As related art, JP 2016-145673 A (Patent Literature 2) is known, for example. Patent Literature 2 describes a ventilation system capable of specifying an outside environmental state. For example, the ventilation system includes a ventilation fan disposed on the internal side of a building, a heat storage element disposed on the external side of the building, a sensor disposed on the internal side of the building relative to the heat storage element and configured to detect the environmental state outside the building, and a control device that controls operation of the ventilation fan and specifies the state outside the building from a detection value detected by the sensor. According to Patent Literature 2, the control device specifies a detection value detected by the sensor as an environmental state outside the building, after a given time elapses from the start of taking in the air from the outside into the inside of the building by the ventilation fan. With such a configuration, the environmental state outside the building can be measured accurately at low cost.
[Patent Literature 1] JP 9-318109 A
[Patent Literature 2] JP 2016-145673 A

In the art described in Patent Literature 2, when the fan is attached to the ventilation unit, small components not illustrated and the like are required. Accordingly, there is a problem that a large number of components are required for the entire ventilation unit. Similarly, in the art of Patent Literature 1, as a very large number of components are used, a large number of components are required for the ventilation device. As described above, a ventilation device provided to a wall of a building such as a house has a problem that the configuration thereof is complicated and a large number of components are required. In other word, there is a problem that it is difficult to realize a ventilation device provided to a wall of a building such as a house with a simple structure.

US 5 050 667 A discloses an apparatus which combines in a single, relatively compact housing the necessary components to efficiently exchange stale room air with fresh outside air. The apparatus includes a single, continuous duct having openings at each end. A heat storing matrix is disposed within the duct. A fan is also placed within the duct. The fan is capable of producing a substantially axial air flow through the duct. The fan is moveable between two positions: a first position wherein air flow is in a direction from the first end to the second end of the duct and a second position wherein air flow is reversed. The apparatus includes means for moving the fan from the first position to the second position such as a solenoid.

EP 3 045 831 A1 discloses a compact ventilation system with a tubular body (2), in which a filter (4), three volume heat exchanger (5) with a heater (6) and a first fan (7) are mounted successively from the external opening (11) to the internal opening (10) of the body (2), the ventilation device has a control unit (8) and before the filter (4) in direction of the external opening (11) of the body (2) there is a second fan (3). Both fans operate separately - the first (7) when introducing air and the second (3) when discharging air from the room.

### SUMMARY

In view of the above, an exemplary object of the present invention is to provide a fan unit capable of solving a problem that it is difficult to realize a ventilation device provided to a wall of a building such as a house with a simple structure.

The present invention is defined in independent claim 1. The dependent claims define embodiments of the invention.
In order to achieve the aforementioned exemplary object, a fan unit according to one embodiment includes
a cylindrical heat storage element,
a cylindrical first holding member configured such that one side of the heat storage element is inserted into the first holding member, and
a cylindrical second holding member configured such that another side of the heat storage element is inserted into the second holding member.

The first holding member includes a guard part, having a space through which air flows, at one end thereof. The first holding member is configured such that the heat storage element is inserted into the first holding member from a side opposite to the side having the guard part, and that a fan is installable between the guard part and the heat storage element.

The first holding member and the second holding member are coupled by a given coupling means in a state where the heat storage element is interposed between the first holding member and the second holding member.

In the fan unit,
an inner peripheral face of the first holding member has a first lock part that locks the coupling means, and
an inner peripheral face of the second holding member has a second lock part that locks the coupling means.

In the fan unit,
a space is formed between the inner peripheral face of the first holding member and a blade of the fan because the first lock part is formed on the inner peripheral face of the first holding member.

The fan unit further includes a cylindrical filling member to be embedded in the first holding member so that the space between the inner peripheral face of the first holding member and the blade of the fan is filled with the filling member.

In the fan unit,
the coupling means includes a band part having a plurality of groove portions.

In the fan unit, the one end, on the guard part side, of the first holding member has a handle.

In the fan unit,
the fan has a structure that drives the fan electrically, and the structure that drives the fan is applied with waterproof finishing.

The fan unit further includes
a second blade member for straightening an air flow generated by the fan. The second blade member is provided between the fan and the heat storage element.

As the fan unit configured as described above, it is possible to provide a fan unit that solves a problem that it is difficult to realize a ventilation device provided to a wall of a building such as a house with a simple structure.

### BRIEF DESCRIPTION OF THE DRAWINGS

Fig. 1 is a cross-sectional view illustrating an example of a used state of a fan unit according to a first exemplary embodiment;
Fig. 2 is a perspective view illustrating an example of an overall configuration of the fan unit illustrated in Fig. 1;
Fig. 3 is an exploded view illustrating an exemplary configuration of the fan unit illustrated in Fig. 1;
Fig. 4 is a perspective view illustrating an exemplary configuration of a first cylindrical part illustrated in Fig. 3;
Fig. 5 is a perspective view illustrating an exemplary configuration of an annular member illustrated in Fig. 3;
Fig. 6 illustrates an exemplary state when a fan and an annular member are provided to the first cylindrical part;
Fig. 7 is a perspective view illustrating an exemplary configuration of a heat storage element;
Fig. 8 is a perspective view illustrating an exemplary configuration of a second cylindrical part;
Fig. 9 illustrates an exemplary relationship between the air volume and the pressure in the cases where an annular member is provided and an annular member is not provided; and
Fig. 10 is a perspective view illustrating an example of another configuration of a fan unit according to the present embodiment.

### EXEMPLARY EMBODIMENT

### <First Exemplary Embodiment

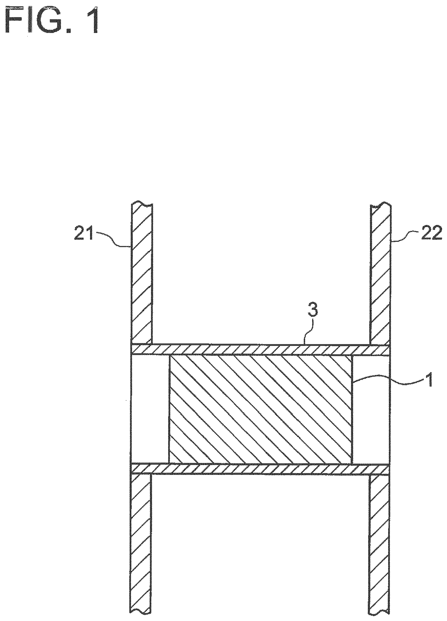

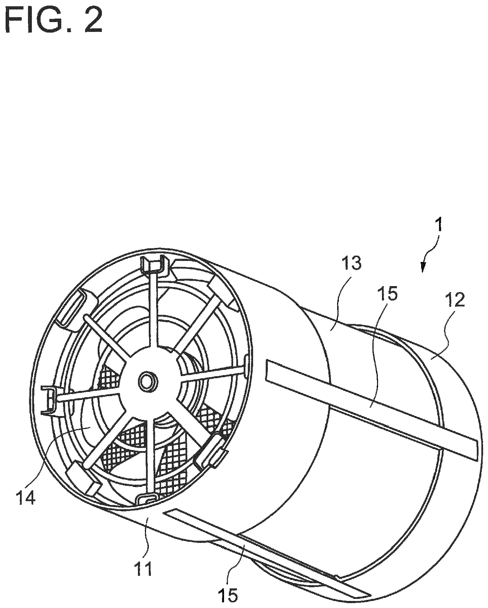

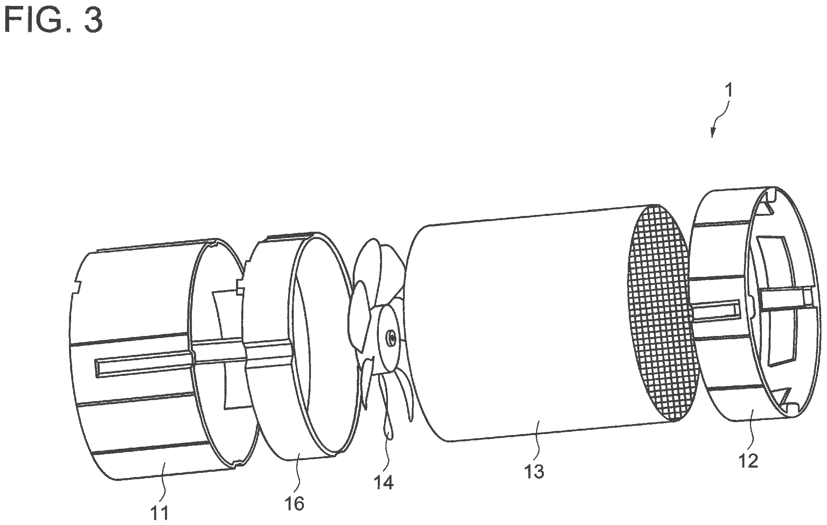

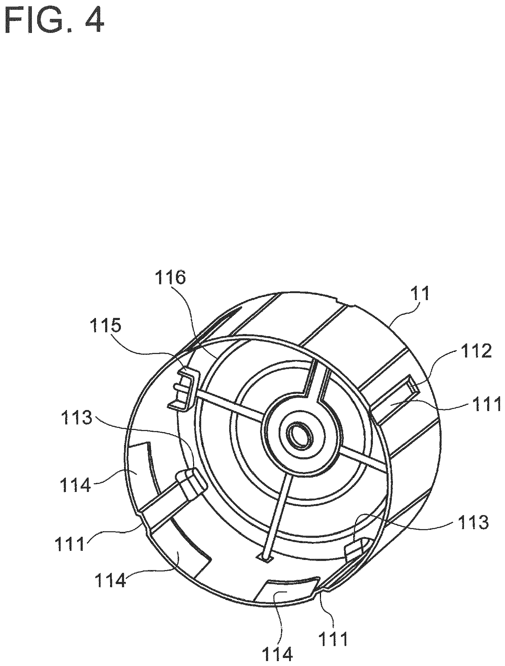

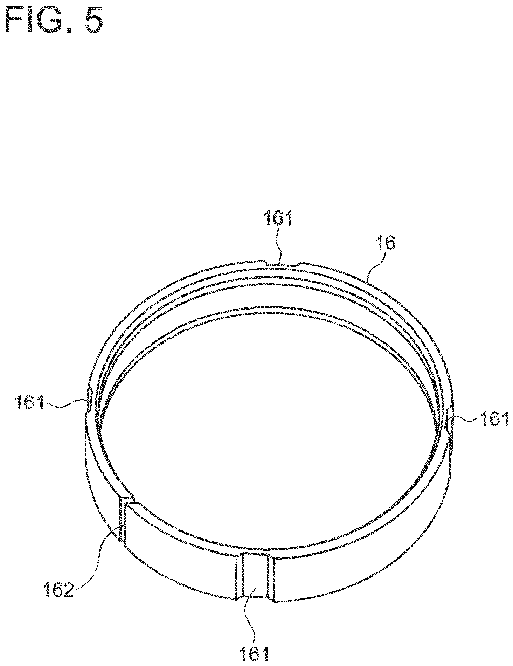

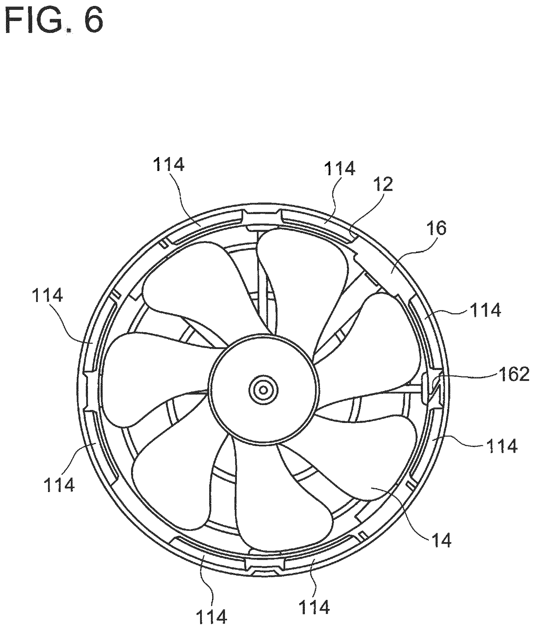

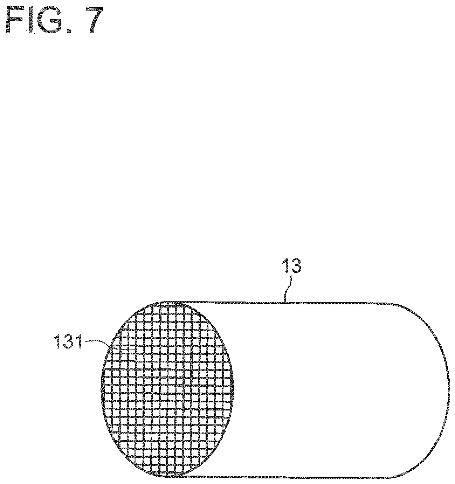

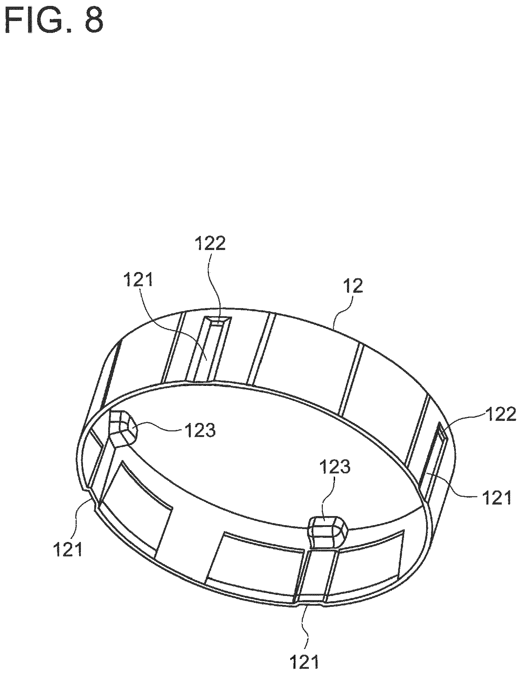

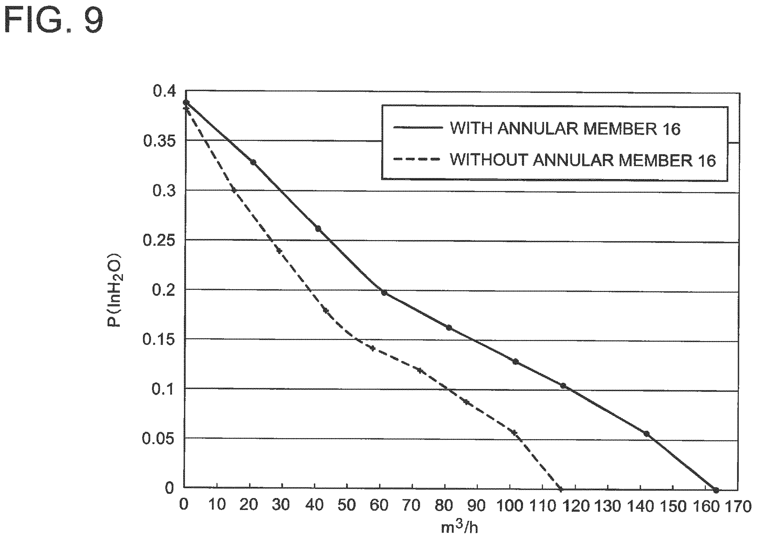

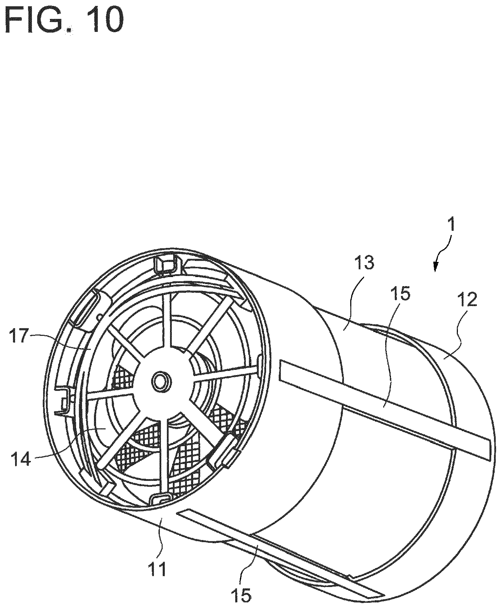

A first exemplary embodiment of the present invention will be described with reference to Figs. 1 to 10. Fig. 1 is a cross-sectional view illustrating an example of a used state of a fan unit 1. Fig. 2 is a perspective view illustrating an example of an overall configuration of the fan unit 1. Fig. 3 is an exploded view illustrating an exemplary configuration of the fan unit 1. Fig. 4 is a perspective view illustrating an exemplary configuration of a first cylindrical part 11. Fig. 5 is a perspective view illustrating an exemplary configuration of an annular member 16. Fig. 6 illustrates an exemplary state when a fan 14 and the annular member 16 are provided to the first cylindrical part 11. Fig. 7 is a perspective view illustrating an exemplary configuration of a heat storage element 13. Fig. 8 is a perspective view illustrating an exemplary configuration of a second cylindrical part 12. Fig. 9 illustrates an exemplary relationship between the air quantity and the pressure in the case of installing the annular member 16 and the case of not installing annular member 16. Fig. 10 is a perspective view illustrating an example of another configuration of the fan unit 1.

In the first exemplary embodiment, description will be given on the fan unit 1 constituting a ventilation unit to be used for ventilating indoor air of a building. As illustrated in Fig. 1, the fan unit 1 is inserted in a cylindrical pipe member 3 (sleeve pipe) inserted in a through hole provided in an inner wall 21 and an outer wall 22 of a building, for example. Then, with rotation of a fan 14, described below, included in the fan unit 1, the indoor air of the building is ventilated. As described below, among the components constituting the ventilation unit, the fan 14, the heat storage element 13, and the like constitute the fan unit 1. Accordingly, it is possible to reduce the number of components required for realizing a ventilation function. Further, according to the fan unit 1 of the present embodiment, it is possible to easily install the fan unit, and to reduce the installation cost of the ventilation unit.

Although not illustrated in Fig. 1, the inner wall 21 side of the place where the pipe member 3 and the fan unit 1 are installed can be provided with an indoor-side hood, a dust-proof filter, and the like, not illustrated, for example. Furthermore, the outer wall 22 side of the place where the pipe member 3 and the fan unit 1 are installed can be provided with an outdoor-side filter and the like, not illustrated, for example. As described above, the inner wall 21 side and the outer wall 22 side may have any configurations not illustrated.

A wall of a building may be provided with a pair of ventilation units each including the fan unit 1 and the like, for example. The pair of ventilation units may be configured such that one of them operates to take in the air from the outside of the building to the inside thereof, and the other operates to discharge the air from the inside of the building to the outside thereof. With the configuration in which the pair of ventilation units are provided and operate in cooperation with each other, the indoor air of the building can be ventilated efficiently. It should be noted that a wall of a building may have three or more ventilation units.

Fig. 2 is a perspective view illustrating an example of an overall configuration of the fan unit 1. Fig. 3 is an exploded view illustrating exemplary components constituting the fan unit 1. Referring to Figs. 2 and 3, the fan unit 1 includes a first cylindrical part 11, a second cylindrical part 12, the heat storage element 13, the fan 14, four binding bands 15, and an annular member 16. For example, the first cylindrical part 11 and the second cylindrical part 12 are coupled by the four binding bands 15 in a state where the heat storage element 13 is interposed between the first cylindrical part 11 and the second cylindrical part 12. The fan 14 is provided in the first cylindrical part 11, between a guard part 116 of the first cylindrical part 11 and the heat storage element 13. The annular member 16 is fitted in the first cylindrical part 11.

Fig. 4 illustrates an exemplary configuration of the first cylindrical part 11 (first holding member). As illustrated in Fig. 4, the first cylindrical part 11 is a cylindrical member made of resin. Referring to Fig. 4, the first cylindrical part 11 is configured such that one end has the guard part 116 and the other end is open. As illustrated in Figs. 2 and 3, the heat storage element 13 is inserted from the open side (a side opposite to the side having the guard part 116) of the first cylindrical part 11, into the first cylindrical part 11.

The outer peripheral face of the first cylindrical part 11 has a binding band groove 111 that is a recess for allowing the binding band 15 to pass through. The binding band groove 111 is formed to have a predetermined length from the open side end toward the side having the guard part 116, in the outer peripheral face of the first cylindrical part. One end portion, at the guard part 116 side, of the binding band groove 111 has a binding band insertion through hole 112 for inserting the binding band 15. With such a configuration, the binding band 15 passes through the outer peripheral face of the first cylindrical part 11 along the binding band groove 111, and then, is inserted in the first cylindrical part 11 through the binding band insertion through hole 112. On the outer peripheral face of the first cylindrical part 11, four binding band grooves 111 are formed. For example, the binding band grooves 111 are respectively formed at four positions by which the circular first cylindrical part 11 is equally divided into four when the first cylindrical part 11 is seen in a direction from the guard part 116 toward the open side (an axis direction of rotation of the fan 14). The four positions are located between frames described below. The number of the binding band grooves 111 formed on the outer peripheral face of the first cylindrical part 11 may be other than that illustratively shown in Fig. 4, such as two.

At a position on the inner peripheral face of the first cylindrical part 11, corresponding to the position where the binding band insertion through hole 112 is formed, a binding band lock part 113 for locking the end portion, on the first cylindrical part 11 side, of the binding band 15 is formed. As described below, the binding band 15 has a plurality of groove portions at given intervals, for example, and when the groove portion and a hook portion provided to the binding band lock part 113 engage with each other, the binding band 15 is locked by the binding band lock part 113. In other words, the binding band 15 passes through the outer peripheral face of the first cylindrical part 11 along the binding band groove 111, and then, is inserted in the first cylindrical part 11 through the binding band insertion through hole 112, and is locked by the binding band lock part 113 in the first cylindrical part 11. It should be noted that the configuration of locking the binding band 15 by the binding band lock part 113 is not limited to that exemplary illustrated above, if an end portion of the binding band 15 can be locked by the binding band lock part 115. The binding band 15 may be locked by the binding band lock part 113 by means of thermocompression, for example.

Further, at a predetermined position on the open side on the inner peripheral face of the first cylindrical part 11, an annular member lock part 114 to be used for fitting the annular member 16 into the first cylindrical part 11 is formed. The annular member lock part 114 is in a shape having a vertex on the guard part 116 side. The annular member lock part 114 allows the annular member 16 to move from the open side to the guard part 116 side, while locking the annular member 16 at the guard part 116 side so as to prevent movement of the annular member 16 from the guard part 116 side to the open side. With such a configuration, the annular member 16 can be fitted in the annular member lock part 114, for example. The annular member lock part 114 is formed to sandwich a protrusion formed on the inner peripheral face of the first cylindrical part 11 because of the binding band groove 111 being formed on the outer peripheral face of the first cylindrical part 11. This means that eight annular member lock parts 114 are formed on the inner peripheral face of the first cylindrical part 11, for example (the number may be other than eight).

Further, one end of the first cylindrical part 11 has the guard part 116, as described above. The guard part 116 is configured of a center portion at which the rotation axis of the fan 14 is positioned and a motor, not illustrated, for rotating the fan 14 or the like can be installed, a plurality of annular portions coaxial with the rotation axis of the fan 14, and four frames provided in the radial direction of the first cylindrical part 11. With the configuration described above, the guard part 116 prevents an object such as a finger from entering from the outside of the first cylindrical part 11 in the fan 14 direction, while allowing an air flow generated by rotation of the fan 14 and the like. Accordingly, it can be said that the guard part 116 is configured to have a space through which the air flows.

The guard part 116 has a connector insertion part 115 at a given position (for example, near an intersection point between one of the frames and the inner peripheral face of the first cylindrical part 11) of the guard part 116. In the connector insertion part 115, a connector, not illustrated, to be connected with a motor not illustrated or the like is inserted. A motor of the fan 14 receives electric power and various types of instructions (for example, rotation stop instruction, rotation start instruction, instruction of rotational direction, and the like) from an external device via a connecter inserted in the connector insertion part 115.

Fig. 5 illustrates an exemplary configuration of the annular member 16. As illustrated in Fig. 5, the annular member 16 is a member made of resin formed in an almost annular (almost cylindrical) shape, for example. With reference to Fig. 5, the annular member 16 has four grooves 161 on the outer peripheral face. Each of the grooves 161 is formed at a position corresponding to the position where the binding band lock part 113 of the first cylindrical part 11 is formed. The annular member 16 also has a gap 162. By forming the gap 162 in the annular member 16, it is possible to easily change the diameter of the annular member 16 by attaching or separating the gap 162. In other words, the diameter of the annular member 16 can be reduced easily by bringing the both ends of the gap 162 into contact with each other. Thereby, it is possible to easily fit the annular member 16 into the first cylindrical part 11, for example.

The annular member 16 has a thickness corresponding to the height of the binding band lock part 113, for example. As described above, the inner peripheral face of the first cylindrical part 11 has the binding band lock part 113. Accordingly, as the binding band lock part 113 is provided, a space is formed between the portion where the binding band lock part 113 is not provided on the inner face of the first cylindrical part 11 and a blade of the fan 14. In the present embodiment, by fitting the annular member 16 into the first cylindrical part 11 as illustrated in Fig. 6, the space formed between the inner face of the first cylindrical part 11 and a blade of the fan 14 is filled. This means that the annular member 16 functions as a filling member with which the space formed between the first cylindrical part 11 and a blade of the fan 14 is filled. As described above, as the space between the inner face of the first cylindrical part 11 and a blade of the fan 14 is filled by using the annular member 16, the PQ characteristic (air volume-static pressure characteristic) of the fan unit 1 can be improved as described below.

As illustrated in Fig. 2, the fan 14 is provided in the first cylindrical part 11, between the guard part 116 and the heat storage element 13. For example, the annular member 16 is fitted in the first cylindrical part 11 and the fan 14 is provided, and then, the heat storage element is inserted in the first cylindrical part 11. The fan 14 is provided at a center portion of the guard part 116 via a motor not illustrated, for example. When the motor not illustrated rotates, the fan 14 rotates in the first cylindrical part 11. As described above, the motor receives electric power and various types of instructions from an external device via a connector inserted in the connector insertion part 115.

Fig. 7 illustrates an exemplary configuration of the heat storage element 13. As illustrated in Fig. 7, the heat storage element 13 is a cylindrical member having a given length, made of metallic oxide such as aluminum oxide, ceramics, or the like. For example, the heat storage element 13 is configured of a porous member in which one end and the other end communicate with each other through a plurality of holes 131. With such a configuration, inside the heat storage element 13, heat of the air passing through the holes 131 formed from one end to the other end is accumulated, and the heat accumulated in the heat storage element 13 is absorbed by the air when the air passes from one end to the other end.

In the present embodiment, the shape of the hole 131 is not limited particularly. The shape of the hole 131 may be a circle, a square, or a hexagon (honeycomb structure).

Fig. 8 illustrates an exemplary configuration of the second cylindrical part 12 (second holding member). As illustrated in Fig. 8, the second cylindrical part 12 is a cylindrical member made of resin, for example. Referring to Fig. 8, the second cylindrical part 12 is configured such that a binding band lock part 123 is provided near one end, and the other end is open. As illustrated in Figs. 2 and 3, the heat storage element 13 is inserted from a side opposite to the side having the binding band lock part 123 into the second cylindrical part 12.

The outer peripheral face of the second cylindrical part 12 has a binding band groove 121 that is a dent where the binding band 15 passes through. The binding band groove 121 is formed to have a given length from the open side end toward the side with the binding band lock part 123, on the outer peripheral face of the second cylindrical part 12. An end portion, where the binding band lock part 123 is formed, of the binding band groove 121, has a binding band insertion through hole 122 for inserting the binding band 15. With such a configuration, the binding band 15 passes through the outer peripheral face of the second cylindrical part 12 along the binding band groove 121, and then, is inserted in the second cylindrical part 12 through the binding band insertion through hole 122. The outer peripheral face of the second cylindrical part 12 has four binding band grooves 121, for example. For example, the binding band groove 121 is formed at a position corresponding to the position of the binding band groove 111 formed on the outer peripheral face of the first cylindrical part 11. The number of the binding band grooves 121 formed on the outer peripheral face of the second cylindrical part 12 may be other than that illustratively shown in Fig. 8, such as two. However, it is desirable that the number of the binding band grooves 121 is the same as the number of the binding band grooves 111.

On the inner peripheral face of the second cylindrical part 12, at a position corresponding to the position where the binding band insertion through hole 122 is formed, a binding band lock part 123 for locking the end portion, on the second cylindrical part 12 side, of the binding band 15 is formed. As described below, the binding band 15 has a plurality of groove portions at given intervals, for example, and when the groove portion and a hook portion provided to the binding band lock part 123 engage with each other, the binding band 15 is locked by the binding band lock part 123. In other words, the binding band 15 passes through the outer peripheral face of the second cylindrical part 12 along the binding band groove 121, and then, is inserted in the second cylindrical part 12 through the binding band insertion through hole 122, and is locked by the binding band lock part 123 in the second cylindrical part 12. It should be noted that the configuration for locking the binding band 15 by the binding band lock part 123 is not limited to the case illustratively described above, if an end portion of the binding band 15 can be locked by the binding band lock part 123. The binding band 15 may be locked by the binding band lock part 123 by means of thermocompression, for example.

The binding band 15 (coupling means) is a band made of resin having flexibility, for example. The binding band 15 has a plurality of groove portions not illustrated, and is configured to engage with a hook portion of the binding band lock part 113 or the binding band lock part 123 to thereby be able to be locked by the binding band lock part 113 or 123 at an arbitrary position in the binding band 15. The binding band 15 may be one called Ty-Rap (registered trademark), INSULOK (registered trademark), or the like, for example. It should be noted that the binding band 15 generally includes a band part having a plurality of groove portions, and a lock part having a hook portion. The binding band 15 described in the present embodiment may not include a configuration corresponding to a lock part if it has at least a configuration corresponding to a band part.

The fan unit 1 includes the first cylindrical part 11, the second cylindrical part 12, the heat storage element 13, the fan 14, the four binding bands 15, and the annular member 16, as described above, for example. The fan unit 1 is configured such that the annular member 16 is inserted in the first cylindrical part 11, and in a state where the fan 14 is provided, the heat storage element 13 is interposed between the first cylindrical part 11 and the second cylindrical part 12, and the first cylindrical part 11 and the second cylindrical part 12 with the heat storage element 13 being interposed between them are coupled by the binding bands 15, for example.

As described above, the fan unit 1 of the present embodiment includes the first cylindrical part 11, the second cylindrical part 12, the heat storage element 13, the fan 14, the four binding bands 15, and the annular member 16. The first cylindrical part 11 is configured such that the fan 14 can be provided in the first cylindrical part 11. As described above, according to the fan unit 1 of the present embodiment, the fan unit can be realized with a very small number of components. Accordingly, with use of the fan unit 1 of the present embodiment, it is possible to solve the problem that it is difficult to realize a fan unit provided to a wall of a building such as a house with a simple structure. Further, according to the fan unit 1 of the present embodiment, it is possible to easily install the fan unit, and to reduce the installation cost of the ventilation unit.

Fig. 9 illustrates examples of air volume-static pressure characteristics of the case where the annular member 16 is fitted in the first cylindrical part 11 and the case where the annular member 16 is not fitted in the first cylindrical part 11. Specifically, in the graph illustrated in Fig. 9, the X axis represents air volume (m³/h), and the Y axis represents pressure (InH₂O). Referring to Fig. 9, it is found that when the annular member 16 is fitted in the first cylindrical part 11, the air volume caused by the fan unit 1 is increased. Accordingly, it is found that when the annular member 16 is fitted in the first cylindrical part 11, the indoor air of the building can be ventilated more efficiently.

In the present embodiment, the fan unit 1 has the annular member 16. However, the fan unit 1 may not have the annular member 16. In other words, the fan unit 1 may be configured of the first cylindrical part 11, the second cylindrical part 12, the heat storage element 13, the fan 14, and the four binding bands 15.

Further, in the present embodiment, the binding band 15 is exemplary shown as a coupling means for coupling the first cylindrical part 11 and the second cylindrical part 12. However, the first cylindrical part 11 and the second cylindrical part 12 may be coupled by a coupling means other than the binding band 15 such as a rope.

Further, as illustrated in Fig. 10, the outside, on the side with the guard part, of the first cylindrical part 11 may have a handle 17. The handle 17 is made of a material similar to that of the binding band 15, for example. By providing the handle 17 to the first cylindrical part 11, it is possible to install the fan unit 1 more easily.

The center portion of the fan 14 is provided with a motor that electrically drives the fan 14, and a base plate. The motor and the base plate may be applied with waterproof finishing. This means that by applying waterproof finishing to the driving structure provided along with the fan 14, the fan 14 itself may be applied with waterproof finishing. As an example of waterproof finishing, the surface of the base plate is applied with waterproof coating by resin spray, and resin is embedded in the motor. However, any method can be used for waterproof finishing of the fan 14.

By applying waterproof finishing to the fan 14 itself as described above, the whole fan unit 1 becomes waterproof. Accordingly, the fan unit 1 can be cleaned directly. For example, it can be washed in water by using a dishwasher, for example. Consequently, it is possible to reduce the labor for cleaning the fan unit 1, whereby it can be kept clean easily. It should be noted that by sealing the inside of the motor with resin as described above, salt damage on the metallic material can also be suppressed.

The configuration of the fan 14 of the fan unit 1 may have a two-layered propeller structure. Specifically, in the fan 14, that is, in the space between the fan 14 and the heat storage element 13, a fixed propeller (not illustrated) that is a second blade member may be provided additionally. The fixed propeller has a function of straightening the air flow generated by rotation of the fan 14. For example, the fixed propeller has blades formed to guide the air flow generated by the fan 14 from the outer peripheral side to the center side. By providing the fixed propeller between the fan 14 and the heat storage element 13 as described above, it is possible to evenly guide the air flow all over the heat storage element 13 so as to prevent passage of the air flow generated by the fan 14 from being concentrated on one portion such as an outer peripheral side of the heat storage element 13. It should be noted that the second blade member is not limited to be fixed. Any structure is applicable if it has a function of straightening the air flow generated by the fan 14.

While the present invention has been described with reference to the exemplary embodiment described above, the present invention is not limited to the above-described embodiment. The form and details of the present invention can be changed within the scope of the present invention which is defined by the appended claims.

### REFERENCE SIGNS LIST

- 1: fan unit
- 11: first cylindrical part
- 111: binding band groove
- 112: binding band insertion through hole
- 113: binding band lock part
- 114: annular member lock part
- 115: connector insertion part
- 116: guard part
- 12: second cylindrical part
- 121: binding band groove
- 122: binding band insertion through hole
- 123: binding band lock part
- 13: heat storage element
- 131: hole
- 14: fan
- 15: binding band
- 16: annular member
- 161: groove
- 162: gap
- 17: handle
- 21: inner wall
- 22: outer wall
- 3: pipe member

## Claims

1. A fan unit (1) comprising:
a heat storage element (13) in a cylindrical shape;
a first holding member (11) in a cylindrical shape, the first holding member being configured such that one side of the heat storage element (13) is inserted into the first holding member; and
a second holding member (12) in a cylindrical shape, the second holding member being configured such that another side of the heat storage element (13) is inserted into the second holding member, wherein
the first holding member (11) includes a guard part (116), having a space through which air flows, at one end of the first holding member, and the first holding member is configured such that the heat storage element (13) is inserted into the first holding member from a side opposite to the side having the guard part (116), and that a fan (14) is installable between the guard part (116) and the heat storage element (13), and
the first holding member (11) and the second holding member (12) are coupled by a given coupling means (15) in a state where the heat storage element (13) is interposed between the first holding member and the second holding member, and wherein
an inner peripheral face of the first holding member has a first lock part (113) that locks the coupling means, and
an inner peripheral face of the second holding member has a second lock part (123) that locks the coupling means,
**characterized in that**
a space is formed between the inner peripheral face of the first holding member and a blade of the fan (14) because the first lock part is formed on the inner peripheral face of the first holding member, and
the fan unit (1) further comprises a cylindrical filling member (16) to be embedded in the first holding member so that the space between the inner peripheral face of the first holding member and the blade of the fan (14) is filled with the filling member.

2. The fan unit (1) according to claim 1, wherein
the coupling means includes a band part having a plurality of groove portions.

3. The fan unit (1) according to claims 1 or 2, wherein
the one end, on the guard part (116) side, of the first holding member has a handle (17).

4. The fan unit (1) according to any of claims 1 to 3, wherein
the fan (116) has a structure that drives the fan (116) electrically, and the structure that drives the fan (116) is applied with waterproof finishing.

5. The fan unit (1) according to any of claims 1 to 4, further comprising
a second blade member for straightening an air flow generated by the fan (116), the second blade member being provided between the fan (116) and the heat storage element (13).

## Patentansprüche

1. Eine Ventilatoreinheit (1) umfassend:
ein Wärmespeicherelement (13) in zylindrischer Form;
ein erstes Halteelement (11) in einer zylindrischen Form, wobei das erste Halteelement so konfiguriert ist, dass eine Seite des Wärmespeicherelements (13) in das erste Halteelement eingeführt wird; und
ein zweites Halteelement (12) in einer zylindrischen Form, wobei das zweite Halteelement so konfiguriert ist, dass eine andere Seite des Wärmespeicherelements (13) in das zweite Halteelement eingeführt wird, wobei
das erste Halteelement (11) einen Schutzteil (116) mit einem von Luft durchströmten Raum an einem Ende des ersten Halteelements aufweist, und das erste Halteelement so konfiguriert ist, dass das Wärmespeicherelement (13) von einer Seite, die der Seite mit dem Schutzteil (116) gegenüberliegt, in das erste Halteelement eingeführt wird, und dass ein Ventilator (14) zwischen dem Schutzteil (116) und dem Wärmespeicherelement (13) einbaubar ist, und
das erste Halteelement (11) und das zweite Halteelement (12) durch ein gegebenes Kopplungsmittel (15) in einem Zustand gekoppelt sind, in dem das Wärmespeicherelement (13) zwischen dem ersten Halteelement und dem zweiten Halteelement angeordnet ist, und wobei
eine innere Umfangsfläche des ersten Halteelements ein erstes Verriegelungsteil (113) aufweist, das die Kopplungsmittel verriegelt, und
eine innere Umfangsfläche des zweiten Halteelements ein zweites Verriegelungsteil (123) aufweist, das die Kopplungsmittel verriegelt,
**dadurch gekennzeichnet, dass**
ein Raum zwischen der Innenumfangsfläche des ersten Halteelements und einem Flügel des Ventilators (14) gebildet wird, weil das erste Verriegelungsteil an der Innenumfangsfläche des ersten Halteelements ausgebildet ist, und
die Ventilatoreinheit (1) ferner ein zylindrisches Füllelement (16) umfasst, das in das erste Halteelement einzubetten ist, so dass der Raum zwischen der inneren Umfangsfläche des ersten Halteelements und dem Flügel des Ventilators (14) mit dem Füllelement gefüllt ist.

2. Die Ventilatoreinheit (1) nach Anspruch 1, wobei
das Kopplungsmittel ein Bandteil mit einer Vielzahl von Nutabschnitten enthält.

3. Die Ventilatoreinheit (1) nach Anspruch 1 oder 2, wobei
das eine Ende auf der Seite des Schutzteils (116) des ersten Halteelements einen Griff (17) aufweist.

4. Die Ventilatoreinheit (1) nach einem der Ansprüche 1 bis 3, wobei
der Ventilator (116) eine Struktur hat, die den Ventilator (116) elektrisch antreibt, und die Struktur, die den Ventilator (116) antreibt, mit einer wasserfesten Beschichtung versehen ist.

5. Die Ventilatoreinheit (1) nach einem der Ansprüche 1 bis 4, weiter umfassend
ein zweites Flügelelement zum Begradigen eines durch den Ventilator (116) erzeugten Luftstroms, wobei das zweite Flügelelement zwischen dem Ventilator (116) und dem Wärmespeicherelement (13) vorgesehen ist.

## Revendications

1. Une unité (1) formant ventilateur comprenant :
un élément (13) de stockage de chaleur de forme cylindrique ;
un premier élément de maintien (11) de forme cylindrique, le premier élément de maintien étant configuré de telle sorte qu'un côté de l'élément (13) de stockage de chaleur soit inséré dans le premier élément de maintien ; et
un deuxième élément de maintien (12) de forme cylindrique, le deuxième élément de maintien étant configuré de telle sorte qu'un autre côté de l'élément (13) de stockage de chaleur soit inséré dans le deuxième élément de maintien,
le premier élément de maintien (11) comprenant une partie de protection (116), ayant un espace à travers lequel l'air circule, à une extrémité du premier élément de maintien, et le premier élément de maintien étant configuré de telle sorte que l'élément (13) de stockage de chaleur soit inséré dans le premier élément de maintien d'un côté opposé au côté ayant la partie de protection (116), et qu'un ventilateur (14) soit apte à être installé entre la partie de protection (116) et l'élément (13) de stockage de chaleur, et
le premier élément de maintien (11) et le deuxième élément de maintien (12) sont reliés par un moyen de liaison donné (15) dans un état dans lequel l'élément (13) de stockage de chaleur est interposé entre le premier élément de maintien et le deuxième élément de maintien, et
une face périphérique intérieure du premier élément de maintien présentant une première partie de verrouillage (113) qui verrouille les moyens de liaison, et
une face périphérique du deuxième élément de maintien présente une deuxième partie de verrouillage (123) qui verrouille les moyens de liaison,
**caractérisée en ce que**
un espace est formé entre la face périphérique intérieure du premier élément de maintien et une pale du ventilateur (14) car la première partie de verrouillage est formée sur la face périphérique intérieure du premier élément de maintien, et
l'unité (1) formant ventilateur comprend en outre un élément de remplissage cylindrique (16) destiné à être encastré dans le premier élément de maintien de sorte que l'espace entre la face périphérique intérieure du premier élément de maintien et la pale du ventilateur (14) est rempli de l'élément de remplissage.

2. L'unité (1) formant ventilateur selon la revendication 1, dans laquelle
le moyen de liaison comprend une partie de bande ayant une pluralité de portions formant des rainures.

3. L'unité (1) formant ventilateur selon les revendications 1 ou 2, dans laquelle
la première extrémité, du côté de la partie de protection (116), du premier élément de maintien, a une poignée (17).

4. L'unité (1) formant ventilateur selon l'une quelconque des revendications 1 à 3, dans laquelle
le ventilateur (116) a une structure qui entraîne le ventilateur (116) électriquement, et la structure qui entraîne le ventilateur (116) est appliquée avec une finition étanche.

5. L'unité (1) formant ventilateur selon l'une quelconque des revendications 1 à 4, comprenant en outre
un deuxième élément formant pale pour lisser un flux d'air généré par le ventilateur (116), le deuxième élément formant pale étant prévu entre le ventilateur (116) et l'élément (13) de stockage de chaleur.
